# EUROPEAN PATENT SPECIFICATION

(11) **EP 3 081 119 B1**
(45) Date of publication and mention of the grant of the patent: **10.04.2019**
(21) Application number: 14824562.4
(22) Date of filing: 02.12.2014
(51) Int. Cl.: A47J 31/00

(54) **BEVERAGE PREPARATION MACHINE AND PROCESS OF PRODUCTION OF SUCH A MACHINE**
GETRÄNKEZUBEREITUNGSMASCHINE UND VERFAHREN ZUR HERSTELLUNG DIESER MASCHINEN
MACHINE DE PRÉPARATION DE BOISSONS ET PROCÉDÉ DE PRODUCTION DESDITES MACHINES

(30) Priority: 02.12.2013 PT 10732813
(43) Date of publication of application: 19.10.2016
(73) Proprietor: Novadelta-Comércio e Industria de Cafés, Lda., 1950-041 Lisboa (PT)
(72) Inventor: NABEIRO, Rui Miguel, 7370-112 Campo Maior (PT)
(74) Representative: Ferreira Pinto, Francisca
(86) International application number: PCT/PT2014/000070
(87) International publication number: WO 2015/084201

(56) References cited:
- EP-A1- 1 949 827
- WO-A1-2013/160278
- DE-A1-102009 048 233
- FR-A1- 2 653 649

## Description

### Field of the invention

The present invention refers to the field of beverage preparation machines, notably based upon the extraction of aromatic substances such as for example espresso type coffee, tea and similar, provide in individual portion packages, such as for example in the form of rigid capsules or flexible pods. In particular, the present invention refers to the configuration of the machine structural parts so as to simplify the production and assembly thereof, and this way reduced the production costs of said machines.

The present invention further refers to a process of production of said beverage preparation machines.

### Background of the invention

The prior art includes several solutions relating to the configuration of the machine structural parts aiming at optimizing a respective production. This purpose is particularly relevant in the case of beverage preparation machines with the type of dimensional and operational requisites usually expected from the preparation of espresso type coffee, tea and similar, in particular from an extraction process of portion packages. In this sense, as relevant aspects for the manufacturing cost of said machines, there are in particular identified issues relating to the configuration of the molds for production of the machine structural parts (e.g., EP 0324686 A1) and to the configuration in view of a respective modular-like assembly (e.g., EP 0761150 B1, WO 2009/130099 A1, WO 2012/136643 A1). None of the documents in the prior art proposes a configuration of the machine structural parts obtainable by means of direct molds and thus resulting advantageous in terms of respective manufacturing effort, both in terms of production of the molded parts as of respective assembly. On the other hand, several documents point to a machine envelope part formed by multiple, at least two, machine structural parts of the machine (e.g., DE 2010 007310 A1, WO 2012/136666 A1), and, therefore, requiring a greater assembly effort.

The FR 653649 A1 also discloses a portable machine for the preparation of beverages, such as coffee, tea, whereby said machine comprises a box-like casing.

There is therefore a need for identifying innovative solutions so as to provide beverage preparation machines that minimize the manufacturing effort of the structural parts, as well as the assembly effort thereof and main functional components of the machine.

### General description of the invention

The objective of the present invention is to provide a machine for preparing beverages, including espresso type coffee, tea and similar, based upon the processing of respective individual portion packages, including in the form of rigid capsules and flexible pods, and that requires a smaller production and assembly effort of the main machine functional components and structural parts, that is with greater economic production efficiency.

This goal is attained according to the present invention by means of a beverage preparation machine according to claim 1.

In particular, the beverage preparation machine according to the present invention presents two machine structural parts, whereby said machine structural parts do not present perforations, recesses or convexities developing along two or more different directions. This aspect enables that said structural parts can be produced by direct injection molds, i.e. injection molds that can be opened for removal of the injected piece by means of a movement along a single direction, thereby substantially reducing the machine production costs. In particular, said machine structural parts include only a machine base part, configured so as to serve as support to said extraction device, and a machine envelope part, configured in form of convex shell, preferentially of a box type, or similar, extending along the width and height of the machine so as to confine inside said extraction device and fluid heating and compression means.

According to a preferred embodiment, said machine base part presents a first base part developing along a horizontal plan and adapted so as to support said fluid heating and compression means, provided in two devices arranged one next to the other or one on top of the other, and a second base part that projects from said first base part and is adapted so as to support said extraction device at a height above said first base part.

According to a preferred embodiment, said machine structural parts are adapted for assembly thereof by means of assembly connections provided along a perimeter zone in said machine base part and for assembly of the functional components by means of assembly connections provided in the machine base part. In particular, all said assembly connections are provided so that they develop along a similar direction, preferentially along a substantially vertical direction.

According to another preferred embodiment, said assembly connections are arranged in closed polygon arrangements on said machine base part. Moreover, it is preferred when at least part, preferentially all assembly connections is of the positive union type, such as for example of the screw type and of the pressure-fit type.

According to another preferred embodiment, said extraction device is adapted with a pressure-fit part in a correspondingly adapted part on said second base part of the machine base part.

One other objective of the present invention is to provide a production process of a machine according to the present invention, in particular in what concerns the production of structural parts and assembly thereof and of functional components.

This objective is solved according to the present invention by means of a process according to claim 7.

In the scope of the present invention, under "machine structural parts" it should be understood those construction elements that support the functional operation components (that is, those components that directly or indirectly participate in the process of preparation of a beverage), notably by means of fixed assembly connections, thereby ensuring a given spatial relation between them.

### Description of the figures

The present invention shall now be explained in greater detail based upon preferred embodiments and in the attached Figures.

The Figures show, in simplified schematic representations:
- Figure 1:: front and side views of a first embodiment of a beverage preparation machine (1) according to the invention;
- Figure 2:: front and side views of a second embodiment of a beverage preparation machine (1) according to the invention;
- Figure 3:: exploded perspective view of the embodiment according to Figure 1;
- Figure 4:: front and side views of a system including beverage preparation machines (1, 1') according to the present invention.

### Detailed description of preferred embodiments of the invention

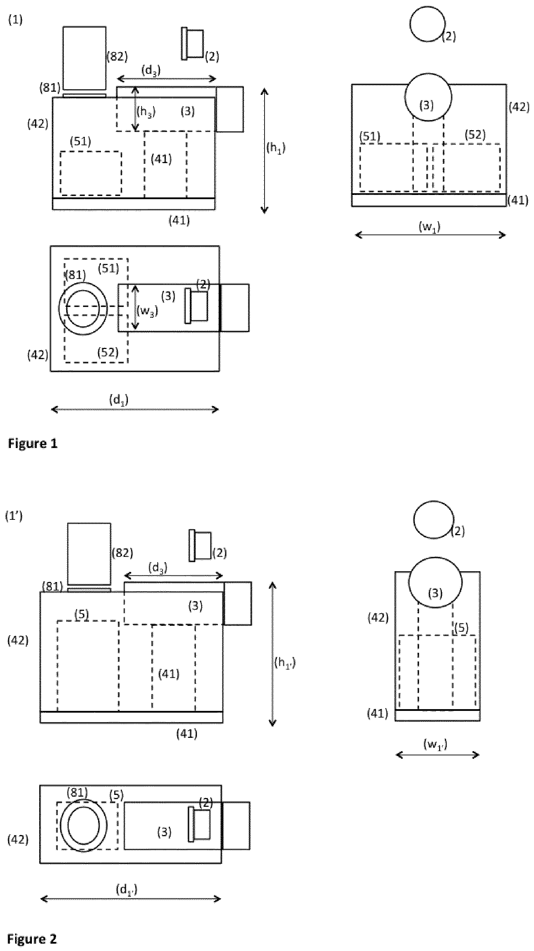

**Figure 1** represents a first embodiment of a machine (1) for preparing beverages according to the present invention, adapted for processing a portion (2) and that presents an extraction device (3), as well as several other functional operation components. In particular, these functional operation components comprise fluid processing means, including fluid heating means (51) and fluid compression means (52), energy supply means, including energy connection means and energy storage means - known and not relevant for the subject matter, therefore not represented -, machine actuation interface means, including machine activation means and operation cycle start buttons - known and not relevant for the subject matter, therefore not represented - and fluid supply means, including connection means (81) to an external source and fluid supply means (82), such as for example a water supply reservoir. The beverage preparation means (1) further presents machine structural parts (41, 42) adapted so as to provide support to said functional components.

In particular, the beverage preparation machine (1) presents only a machine base part (41) configured so as to serve as support base, with a section corresponding to the implantation area of the machine (1), and a machine envelope part (42) configured as a piece in form of box and that defines a height (h₁) and width (w₁) of machine (1) .

According to an inventive aspect, all said machine structural parts (41, 42) are configured without reentrances or convexities developing along two or more different directions, so that they can be obtained in each case by means of direct injection molds, whereby at least one of said machine structural parts (41, 42) - in particular the machine envelope part (42) - preferentially presents a convex shell form.

This solution thus advantageously enables avoiding the use of more complex injection molds, reducing the number of structural parts being used, as well as simplifying the construction and assembly of the machine.

According to the embodiment represented in Figure 1, said machine base part (41), presents a first base part with a general form of plate-type or similar, and presenting a rear region that provides specific support to the support of said fluid processing means (5; 51, 52), including fluid heating means (51) and fluid compression means (52).

In the case of this embodiment, said fluid heating means (51) and fluid compression means (52) are arranged one next to the other along a common horizontal plane.

As aforementioned, the machine envelope part (42) is configured in a convex shell form, preferentially in form of regular prism and so as to defined the maximum dimensions of the beverage preparation machine (1), including in particular the respective maximum height (h₁) and width (w₁).

According to an advantageous embodiment, the machine envelope part (42) is adapted so as to provide support to fluid supply means, in particular water, including fluid connection means (81) adapted for connection to at least one type of external source, preferentially to two types of external source, and external fluid supply means (82), preferentially arranged on the top face of the machine envelope part (42) and at a connection height that is bigger or similar to the height of the injection into said extraction device (3). Said fluid connection means (81) are assembled by means of pressure-fit assembly connections provided on the top face of said machine envelope (42) part.

In the case of a second embodiment represented on **Figure 2****,** the beverage preparation machine (1) presents fluid processing means (5), arranged one on top of the other so as to configure volume that develops along the height, so that it is possible to reduce the width (w₁) of the machine (1), even if with a little increase in the height (h₁) of the machine (1) .

The machine structural parts (41, 42) are adapted so as to be assembled to each other by means of assembly connection provided along a perimeter zone in the machine base part and for assembly of the functional components by means of assembly connections provided on the machine base part (not represented). In particular, all said structural parts of the functional components are provided along a similar direction, preferentially along a substantially vertical direction, so that it results in a more efficient assembly process of the different parts of the machine (1).

Moreover, said assembly connections are preferentially arranged in closed polygon arrangements on said machine base part, and it is preferred when at least part, preferentially all of the assembly connections is the positive union type, such as for example screw type and pressure-fit type.

In the case of the represented embodiment, said fluid processing means (5) are installed by means of assembly connections, for example of screw type, on a first base part of said machine base part (41). Alternatively, said fluid processing means might be installed on a second base part that provides support to said extraction device (3), by means of assembly connections of the screw type, or similar.

According to another preferred embodiment, said extraction device is adapted with a pressure-fit engagement part adapted in corresponding manner on said second base part of the machine base part (not represented).

Moreover, said machine envelope part (42) is installed upon said machine base part (41) by means of assembly connections in a perimeter region of the latter, in particular connections of pressure-fit type (not represented in detail because known by the expert in the field).

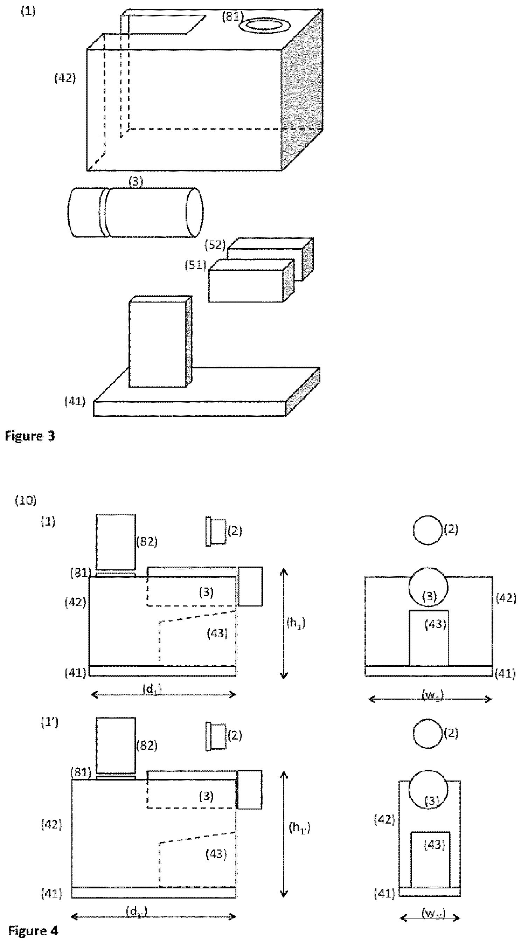

As represented in the exploded perspective view of **Figure 3****,** of the embodiment represented in Figure 1, said machine base part (41) further serves as support to said extraction device (3), preferentially also to other functional components of the machine.

According to a preferred embodiment, said machine base part (41) is further configured so as to serve as support to said extraction device (3), preferentially by means of a respective second base part developing vertically.

Moreover, said machine structural parts (41, 42) are configured so as to be attached to each other by means of preferentially similar assembly connections, such as for example of the screw type or similar.

As one can infer from Figure 3, said machine structural parts (41, 42) are further configured and the respective assembly connections are arranged to be successively installed along a substantially vertical direction, this way substantially simplifying the assembly process of the beverage preparation machine (1) according to the invention.

According to another preferred embodiment, said machine base part (41) is provided on its face oriented downwards with individual space adapted for collecting energy supply means, including energy connection means, such as for example connection cables, and/or energy storage means, such as for example a battery, or similar. These components are known by the expert in the field, and therefore not represented.

According to another inventive aspect, it is provided a system (10) of beverage preparation machines comprising at least two types (1, 1') of machine whereby at least one of the machine structural parts (4), preferentially at least said machine base part (41), presents a similar format and/or dimensions for different types (1, 1') of beverage preparation machines.

According to another inventive aspect, the manufacturing process of beverage preparation machines (1) includes the mold injection of machine base part (41) and of a machine envelope part (42), whereby said mold injection is carried out by means of direct injection molds. Moreover, the process further includes the step of successive assembly of the machine structural parts (4), whereby the latter only requires movements developing within the vertical projection of said machine base part (41), in particular developing along a similar assembly direction, preferentially from top to bottom along a substantially vertical direction.

According to another preferred embodiment, the manufacturing process further includes the step of assembly of the extraction device (3) on the machine base part (41), in particular by means of a pressure-fit type of connection. The manufacturing process further includes the step of assembly of said fluid heating and compression means (51, 52) on said machine base part (41), before of the step of assembly of the machine envelope part (42) on the machine base part (41).

As represented in **Figure 4****,** it is thus provided a system (10) that comprises different types (1, 1') of beverage preparation machines with a similar extraction device (3), but with different machine structural parts (4), including a first type (1) of machine corresponding to the embodiment represented in Figure 1, and a second type (1') of machine corresponding to the embodiment represented in Figure 2.

In view of obtaining a compact construction form, the different types (1, 1') of beverage preparation machines present a maximum height (h₁) of 17 cm, preferentially at most 13 cm, a maximum width (w₁) of 15 cm, preferentially at most 12 cm, and a maximum depth (d₁) of 20 cm, preferentially at most 18 cm. Moreover, it is preferred when said machines (1, 1') of the beverage preparation system (10) present a relation between height (h₁) and width (w₁) of at most 1,5:1, preferentially at most 1,2:1.

The beverage preparation machines (1, 1') further present a collection container (43) of residues (not represented in these drawings in view of a better legibility thereof), arranged underneath said extraction device (3) and adapted for collecting a plurality of portion packages (2) after a respective ejection out of said extraction device (3).

## Claims

1. Machine (1) for preparing beverages based upon an edible substance provided inside a portion package (2), presenting at least one extraction device (3) adapted for interacting in proximity with the exterior envelope of said portion package (2), injecting a pressurized fluid flow and collecting the resulting beverage, and further presenting machine structural parts (4) and fluid heating and compression means (51, 52) adapted for assembly by means of assembly connections, **characterized**
**in that** said machine structural parts (4) consist of:
- a machine base part (41) configured so as to serve as support to said extraction device (3) and
- a machine envelope part (42) configured in form of convex shell, preferentially of box-like format, or similar, so as to confine said extraction device (3) and fluid heating and compression means (51, 52) in its interior,
whereby each of said machine structural parts (4) is configured without zones with perforations, recessions or convexities developing along two or more different directions, whereby said machine structural parts (41, 42) are adapted for assembly to each other by means of assembly connections provided along a perimeter zone of said machine base part (41) and for assembly of the functional components by means of assembly connections provided in said machine base part (41), and in that all assembly connections are provided so that they develop along a substantially vertical direction.

2. Machine (1) according to claim 1, **characterized in that** said machine base part (41) presents a first base part developing along a horizontal plane and adapted so as to support said fluid heating and compression means (51, 52) provided in two device arranged next to each other or one on top of the other, and a second base part that projects from said first base part and is adapted so as to support said extraction device (3) at a height above said first base part.

3. Machine (1) according to claims 1 or 2, **characterized in that** said assembly connections are arranged in closed polygon arrangements on said machine base part (41) .

4. Machine (1) according to claims 1 to 3, **characterized in that** at least part, preferentially all of said assembly connections are of positive union type, such as for example of screw-type and of pressure-fit type.

5. Machine (1) according to claims 1 to 4, **characterized in that** said extraction device (3) presents an engagement part adapted for pressure-fit engagement in a part adapted correspondingly on said second base part of said machine base part (41).

6. Machine (1) according to claims 1 to 5, **characterized in that** said machine envelope part (42) is provided with fluid supply means, in particular water, including fluid connection means (81) adapted for connection to at least one type of external source, preferentially to two types of external sources, and external fluid supply means (82) preferentially arranged on the top face of said machine envelope part (42) and at a connection height that is similar or bigger than the height of injection on said extraction device (3).

7. Process for producing beverage preparation machines according to any one of the claims 1 to 6, **characterized in that** it includes a step of production of the machine structural parts by means of mold injection, including a machine base part (41) and a machine envelope part (42), whereby said mold injection is carried out by means of direct injection molds that can be opened along a single linear movement, and **in that** it further includes the step of successive assembly of the functional components and of the machine structural parts (41, 42), whereby said successive assembly only includes movements that develop substantially within the vertical projection of a machine base part (41), in particular unfolding along a similar assembly direction, preferentially from top to bottom along a substantially vertical direction.

8. Process according to claim 7, **characterized in that** said step of successive assembly of the functional components includes the assembly of an extraction device (3) on a second base part of a machine base part (41) and of energy connection and supply means on a first base part of said machine base part (41).

9. Process according to claims 7 or 8, **characterized in that** said step of successive assembly of the functional components includes the assembly of said fluid heating and compression means (51, 52) on a first base part of said machine base part (41).

10. Process according to claims 7 to 9, **characterized in that** said step of successive assembly of the machine structural parts further includes the assembly of the machine base part (41), whereby said assembly includes at least two assembly connections adapted preferentially as pressure-fit connections and that develop along a substantially vertical direction.

11. Process according to claims 7 to 10, **characterized in that** it includes the step of assembly of fluid connection means (81) on the top face of said machine envelope part (42).

## Patentansprüche

1. Maschine (1) zur Getränkezubereitung basierend auf einer essbaren Substanz vorhanden innerhalb einer Portionspackung (2), darstellend mindestens ein Absauggerät (3) angepasst zur Interaktion in Nähe mit der Außenhülle von genannter Portionspackung (2), in dem ein Druckdurchfluss eingespritzt und das ergebende Getränk gesammelt wird, und weiterhin darstellend Maschinenbauteile (4) und Flüssigkeitswärmer- und Druckmittel (51, 52), angepasst zur Montage mittels Montageanschlüsse,
**dadurch gekennzeichnet,**
**dass** genannte Maschinenbauteile (4) bestehen aus:
- einem Maschinengrundteil (41) so festgelegt, um als Stütze zu genanntem Absauggerät (3) zu dienen, und
- einem Maschinenhüllenteil (42) gestaltet wie ein gewölbtes Gehäuse, vorzugsweise in Boxformat, oder Ähnliches, so, um genanntes Absauggerät (3) und Flüssigkeitswärmer- und Druckmittel (51, 52) in sein Inneres einzuschränken,
wobei jede genannten Maschinenbauteile (4) gestaltet sind ohne Flächen mit Durchbohrungen, Rückgänge oder Wölbungen, die sich entlang zwei oder mehrerer Richtungen entwickeln, wobei genannte Maschinenbauteile (41, 42) zur Montage zueinander mittels Montageanschlüsse angepasst sind, versehen entlang eines Perimetergebietes von genanntem Maschinengrundteil (41) und zur Anordnung von funktionstüchtigen Komponenten mittels Montageanschlüsse versorgt in genanntem Maschinengrundteil (41), und dass alle Montageanschlüsse so versehen sind, um sich entlang einer wesentlich senkrechten Richtung zu entwickeln.

2. Maschine (1) gemäß Anspruch 1 **dadurch gekennzeichnet, dass** genanntes Maschinengrundteil (41) ein erstes Grundteil aufweist, das sich entlang einer waagerechten Ebene entwickelt und so angepasst ist, um genannte Flüssigkeitswärmer- und Druckmittel (51, 52) zu stützen, vorhanden in zwei Geräten nebeneinander oder übereinander angeordnet, und einem zweiten Grundteil, das sich von genanntem ersten Grundteil erstreckt und so angepasst ist, um genanntes Absauggerät (3) oberhalb von genanntem ersten Grundteil zu stützen.

3. Maschine (1) gemäß Ansprüche 1 oder 2 **dadurch gekennzeichnet, dass** genannte Montageanschlüsse in geschlossenen mehreckigen Gestaltungen auf der genannten Maschinengrundteil (41) angeordnet sind.

4. Maschine (1) gemäß Ansprüche 1 bis 3 **dadurch gekennzeichnet, dass** mindestens teils, vorzugsweise alle genannte Montageanschlüsse aus positivem Verbindungsmodell sind, wie z. Bsp. einer Schraube und druckverbindung.

5. Maschine (1) gemäß Ansprüche 1 bis 4 **dadurch gekennzeichnet, dass** genanntes Absauggerät (3) ein Gestaltungsteil aufweist, angepasst zur druckverbindung Gestaltung in einem Teil angepasst entsprechend auf genanntem zweiten Grundteil von genanntem Maschinengrundteil (41).

6. Maschine (1) gemäß Ansprüche 1 bis 5 **dadurch gekennzeichnet, dass** genanntes Maschinenhüllenteil (42) mit Flüssigkeitszufuhrmittel versehen ist, insbesondere Wasser, einschließlich Flüssigkeitsverbindungsmittel (81) angepasst zur Verbindung an mindestens ein Typ von Außenquellen, vorzugsweise zwei Typen von Außenquellen, und externe Flüssigkeitszufuhrmittel (82), vorzugsweise angeordnet auf der Oberfläche von genanntem Maschinenhüllenteil (42) und in Verbindungshöhe, die ähnlich oder größer als die Einspritzhöhe von genanntem Absauggerät (3) ist.

7. Verfahren zur Herstellung von Getränkezubereitungsmaschinen gemäß einer der Ansprüche 1 bis 6 **dadurch gekennzeichnet, dass** es einen Herstellungsschritt der Maschinenbauteile mittels Formeinspritzung beinhaltet, einschließlich einem Maschinengrundteil (41) und einem Maschinenhüllenteil (42), wobei genannte Formeinspritzung mittels direkter Einspritzformen durchgeführt ist, die entlang einer einzelnen Linienbewegung geöffnet werden können, und dass es weiterhin den Schritt von aufeinanderfolgender Montage der funktionstüchtigen Komponenten und der Maschinenbauteilen (41, 42) beinhaltet, wobei genannte aufeinanderfolgende Montage nur Bewegungen beinhaltet, die sich wesentlich innerhalb der senkrechten Erstreckung eines Maschinengrundteiles (41) entwickeln, insbesondere entfaltend entlang einer ähnlichen Montagerichtung, vorzugsweise von oben nach unten entlang einer wesentlich senkrechten Richtung.

8. Verfahren gemäß Anspruch 7 **dadurch gekennzeichnet, dass** genannter Schritt von aufeinanderfolgender Montage der funktionstüchtigen Komponente die Montage eines Absauggerätes (3) auf einem zweiten Grundteil eines Maschinengrundteiles (41) und einer Energieverbindung und Zufuhrmittel auf einem ersten Grundteil von genanntem Maschinengrundteil (41) beinhaltet.

9. Verfahren gemäß Ansprüche 7 oder 8 **dadurch gekennzeichnet, dass** genannter Schritt von aufeinanderfolgender Montage der funktionstüchtigen Komponente die Montage von genannter Flüssigkeitswärmer- und Druckmittel (51, 52) auf einem ersten Grundteil von genanntem Maschinengrundteil (41) beinhaltet.

10. Verfahren gemäß Ansprüche 7 bis 9 **dadurch gekennzeichnet, dass** genannter Schritt von aufeinanderfolgender Montage der Maschinenbauteile weiterhin die Montage des Maschinengrundteiles (41) beinhaltet, wobei genannte Montage mindestens zwei Montageanschlüsse beinhaltet, insbesondere angepasst als druckartige Verbindungen, und die sich entlang einer wesentlich senkrechten Richtung erstrecken.

11. Verfahren gemäß Ansprüche 7 bis 10 **dadurch gekennzeichnet, dass** es den Schritt der Montage von Flüssigkeitsverbindungsmittel (81) auf genanntem Maschinenhüllenteil (42) beinhaltet.

## Revendications

1. Machine (1) de préparation de breuvages basée sur une substance comestible fournie à l'intérieur d'un emballage-portion (2), présentant au moins un dispositif d'extraction (3) adapté à l'interaction à proximité de l'enveloppe externe dudit emballage-portion (2), en injectant un écoulement de fluide pressurisé et en recueillant le breuvage qui en résulte, et en présentant en outre, des parties structurelles de la machine (4) et des moyens de compression et de réchauffage du fluide (51, 52) adaptés pour l'assemblage par les moyens de connexions d'assemblage, **caractérisés par le fait que** les dites parties structurelles de la machine (4) consistent en :
- une partie de base de la machine (41) configurée afin de servir comme support dudit dispositif d'extraction (3) et
- une partie d'enveloppe de la machine (42) configurée sous forme de coque convexe, de préférence avec un format de type boîte, ou similaire, afin de confiner ledit dispositif d'extraction (3) et les moyens de compression et de réchauffage du fluide (51, 52) dans son intérieur,
où chacune des dites parties structurelles de la machine (4) est configurée sans zones comprenant des perforations,récessions ou convexités, en développant tout au long, deux ou plus directions différentes, où les dites parties structurelles de la machine (41, 42) sont adaptées à l'assemblage entre elles aux moyens de connexions d'assemblage, fournies le long d'une zone de périmètre de ladite partie de base de la machine (41) et pour l'assemblage de composants fonctionnels aux moyens de connexions d'assemblage fournis dans ladite partie de base de la machine (41) et **par le fait que** toutes les connexions d'assemblage sont fournies afin qu'elles se développent le long d'une direction substantiellement verticale.

2. Machine (1) selon la revendication 1, **caractérisée par le fait que** ladite partie de base de la machine (41) présente une première partie de base se développant le long d'un plan horizontal et adapté afin de supporter les dits moyens de compression et de réchauffage du fluide (51, 52) fournis dans deux dispositifs, arrangés près l'un de l'autre ou l'un au-dessus de l'autre, et une seconde partie de base qui projette depuis ladite première partie de base et est adaptée afin de supporter ledit dispositif d'extraction (3) à une hauteur au dessus de ladite première partie de base.

3. Machine (1) selon les revendications 1 ou 2, **caractérisée par le fait que** lesdites connexions d'assemblage sont arrangées dans des arrangements en polygone fermés sur ladite partie de base de la machine (41).

4. Machine (1) selon les revendications 1 à 3, **caractérisée par le fait qu'**au moins une partie, de préférence l'ensemble des dites connexions d'assemblage est un type d'union positive, tel que par exemple, de type à vis et de type à pression.

5. Machine (1) selon les revendications 1 à 4, **caractérisée par le fait que** le dispositif d'extraction (3) présente une partie d'engagement adaptée à l'engagement à pression dans une partie proportionnellement adaptée sur ladite seconde partie de base de ladite partie de base de la machine (41).

6. Machine (1) selon les revendications 1 à 5, **caractérisée par le fait que** ladite partie d'enveloppe de la machine (42) est fournie avec des moyens d'approvisionnement de fluide, en particulier de l'eau, y compris des moyens de connexion de fluide (81) adaptés à la connexion à au moins un type de source externe, de préférence à deux types de sources externes, et les moyens d'approvisionnement de fluide externe (82) de préférence arrangés sur la face du dessus de ladite partie d'enveloppe de la machine (42) et à une hauteur de connexion qui est similaire ou supérieure à la hauteur d'injection sur ledit dispositif d'extraction (3).

7. Processus de production de machines de préparation de breuvage selon une quelconque revendication entre 1 et 6, **caractérisé par le fait qu'**il inclut une étape de production des parties structurelles de la machine aux moyens d'injection par moulage, y compris une partie de base de la machine (41) et une partie d'enveloppe de la machine (42), où ladite injection par moulage est menée par des moyens de moulages par injection directe qui peuvent être ouverts le long d'un seul mouvement linéaire et **par le fait qu'**il inclut en outre l'étape de l'assemblage successif des composants fonctionnels et les parties structurelles de la machine (41, 42) où ledit assemblage successif n'inclut que les mouvements qui développe substantiellement dans la projection verticale d'une partie de base de la machine (41), en particulier en déroulant tout au long, une direction d'assemblage similaire, de préférence depuis le dessus jusqu'en bas, le long d'une direction substantiellement verticale.

8. Processus selon la revendication 7, **caractérisé par le fait que** ladite étape de l'assemblage successif des composants fonctionnels inclut l'assemblage d'un dispositif d'extraction (3) sur une seconde partie de base d'une partie de base de la machine (41) et d'une connexion d'énergie et de moyens d'approvisionnement sur une première partie de base de ladite partie de base de la machine (41).

9. Processus selon la revendication 7 ou 8, **caractérisé par le fait que** ladite étape d'assemblage successif des composants fonctionnels inclut l'assemblage des dits moyens de compression et de réchauffage du fluide (51, 52) sur une première partie de base de ladite partie de base de la machine (41).

10. Processus selon les revendications 7 à 9, **caractérisé par le fait que** ladite étape d'assemblage successif des parties structurelles de la machine inclut en outre l'assemblage de la partie de base de machine (41), où ledit assemblage inclut au moins deux connexions d'assemblage adaptées de préférence comme des connexions à pression et qui se développent le long d'une direction substantiellement verticale.

11. Processus selon les revendications 7 à 10, **caractérisé par le fait qu'**il inclut l'étape de l'assemblage des moyens de connexion du fluide (81) sur la face du dessus de ladite partie d'enveloppe de la machine (42).
